# EUROPEAN PATENT SPECIFICATION

(11) **EP 3 362 250 B1**
(45) Date of publication and mention of the grant of the patent: **03.03.2021**
(21) Application number: 15816510.0
(22) Date of filing: 16.10.2015
(51) Int. Cl.: B29C 49/06, B29C 49/64, B29C 49/76, B29C 49/42, B65D 1/02, B29K 67/00, B29L 31/00, A47G 19/12

(54) **PREFORM AND METHOD OF FABRICATION OF A CARAFE BY INJECTION STRETCH BLOW-MOLDING**
VORFORM UND VERFAHREN ZUR HERSTELLUNG EINER KARAFFE DURCH SPRITZSTRECKBLASFORMEN
PRÉFORME ET PROCÉDÉ DE FABRICATION D'UNE CARAFE PAR MOULAGE PAR INJECTION-ÉTIRAGE-SOUFFLAGE

(43) Date of publication of application: 22.08.2018
(73) Proprietor: Société Anonyme des Eaux Minérales d'Evian et en Abrégé "S.A.E.M.E", 74500 Evian-les-Bains (FR)
(72) Inventor: DUARTE DA CAL, Germano, F-74200 Thonon-les-bains (FR); COLLOUD, Alain, F-74200 Reyvroz (FR)
(74) Representative: Plasseraud IP
(86) International application number: PCT/IB2015/002241
(87) International publication number: WO 2017/064532

(56) References cited:
- EP-A1- 2 253 452
- WO-A2-95/29806
- FR-A1- 2 444 555

## Description

### Technical field

The invention relates to a particular liquid container, especially beverage container, made by Injection Blow Molding (IBM) -including or not stretching- of a thermoplastic polymer, such as the PolyEthylene Terephtalate (PET), said manufacturing method involving the injection of a preform.

Hence, the invention also pertains to the preform, as well as to the method of manufacture.

### Background art and technical problems

In the IBM method, the plastic is first molded into "preforms" using the injection molding process. These preforms are produced with the threaded necks of the containers, these latter being intended to be closed with threaded caps. These preforms are packaged, and fed later (after cooling) into a reheat stretch blow molding machine, wherein the preforms are heated above their glass transition temperature, then blown using high pressure air into bottles using metal blow molds. The blowing device includes a blowpipe which injects pressurized air inside the preform to expand itself and to fit the mold. The blowpipe can also participate to a stretching by leaning and pressing on the bottom of preform.

PolyEthylenTerephthalate (PET) is a polymer generally used for making bottles, by this IBM method. The IBM method is known for making bottles, with a neck having, from the opening to the body, a vertical portion, and then an enlargement to form a shoulder and body.

There are numerous IBM made bottles' shapes/designs. The packaging developers of beverages companies seek to propose the most attractive IBM made bottles for the consumers. This search is particularly tricky for premium bottles.

Document EP 2 253 452 discloses a preform in a thermoplastic polymer comprising a neck finish, a neck , a body and a bottom, wherein the body has a circular cross-section. Document EP 2 253 452 also discloses an injection blow molding method of making a bottle with a screw thread wherein a preform is injected molded in a first mold and is then blown-molded in a second mold, said carafe comprising from its top, a neck finish, a neck, a body and a bottom, wherein:
- the body of said bottle has an oval cross-section;
- at least the largest dimension of the cross section of the neck decreases from the top to the base of the neck.
Otherwise, non-closed glass carafes with wide mouth and used to serve drinks (such as water or wine) during a meal are well known.

Numerous carafe shapes are available in the field of the art of entertaining, notably glass carafes with bell-shaped necks. With respect to bottles, these carafes shapes correspond to refined codes for the consumers in the art of entertaining and catering.

But glass carafes are expensive and not adapted to a single-use, with possible recycling. Moreover, a glass carafe is non-closed container with no origin guarantee.

Hence, there is a need for new, attractive, cheap, recyclable and safe carafes, made from plastic material, and in accordance with the refinement codes in the art of entertaining and catering. Such needed carafes go hand in hand with manufacturing methods, especially IBM methods, and the intermediary means involved in these methods.

The invention aims at addressing this goal and especially providing a new and attractive liquid container, especially beverage container, made by Injection Blow-Molding (IBM) of a thermoplastic polymer, such as the PolyEthylene Terephtalate (PET).

### General description of the invention

Pursuing this goal, the inventors have had the merit to develop a new and improved carafe made by an Injection Blow Molding method wherein a preform in a thermoplastic polymer, preferably PET, is injected molded in a first mold and is then blown-molded (preferably stretched-blown-molded) in a second mold, said carafe comprising from its top, a neck finish, a neck, a body and a bottom, wherein:
- the neck finish, the neck, and possibly the body, of said carafe having an oval, preferably elliptic, cross-section;
- at least the largest dimension of the cross section of the neck decreases from the top to the base of the neck (also the top of the body).

These new and attractive premium beverage containers constitute a noteworthy improvement in the field of packaging as sales promoter.

An oval cross section of the neck finish and of the neck, as well as the bell-shaped neck, are prima facie hardly compatible the IBM manufacture of a plastic container.

Indeed, the person having ordinary skill in the art knows that such a neck shape involves difficulties in the high pace industrial production line of filled closed beverage carafes, from preforms of thermoplastic polymer, preferably PET, on the one hand, and beverage to package, on the other hand.
One the key issues in this respect is the correct orientation of the preforms and the carafes throughout said production line.
Such a production line includes IBM comprising the following successive stations: heating in an oven made of one or two parallel rows of IR lamps/ blowing-molding / filling / closing / labeling / boxing. The preforms and the containers circulate in in this by means of a conveyer belt.
It's crucial that each preform be precisely orientated from the beginning of this line, at the time of its introduction in the conveyer belt and in the heating station wherein the preforms are put upside down. After the heating in the right position, the preforms must also enter the blowing mold well orientated
A failure in the orientation of the preforms could have the following side-effects: bad preform heating; decentring of the neck and of the body during blowing; difficulty to put the oval neck preform under pressure without leaks or over pressures (blowings up); bad filling, bad sealing and watertightness; bad positioning of the label.
These defects would be detrimental to the quality of the filled and closed carafes.
Now, said orientation as well as the prehension by the conveyer belt of the preforms and of the carafe are very tricky because of the oval shape of the neck finish and the neck.
All these foreseeable difficulties were so many obstacles to the development of an oval neck carafe made industrially by IBM.

### Definitions

According to the terminology of this text, the following non limitative definitions have to be taken into consideration:
- Every singular designates a plural and reciprocally.
- *"liquid"* refers to any liquid which is intended to be contained in the thin-walled container or bottle according to the invention, especially a beverage or a non-food liquid such as a home care product or a personal care product, preferably a beverage The beverage that can be filled in the carafes can be for example water, for example purified water, spring water, natural mineral water, optionally flavored, optionally carbonated. The beverage can be an alcoholic beverage such as bier or wine. The beverage can be a soda for example a cola beverage, preferably carbonated. The beverage can be a fruit juice, optionally carbonated. The beverage can be vitamin water or an energy drink. The beverage can be a milk based product such as milk or drinking dairy fermented products such as yogurt.
- *"plastic"* refers to mouldable thermoplastic homopolymer or copolymer which preferably exhibits strain hardening when they are elongated.
- *"moulded"* refers to any forming technique of thermoplastic raw materials, such as extrusion blow moulding, extrusion profiles & sheet, injection blow moulding, injection moulding (gas assisted), injection stretch blow moulding insert moulding, rotational moulding.
- *"substantially"* means at least 80%, preferably at least 90%, more preferably at least 95%.
- *"circa"* or *"around"* means with a tolerance of +/- 10%.

### The carafe

According to an embodiment, the carafe according to the invention presents an opening which is defined by a lip comprising one face included in a plane perpendicular to the carafe axis.

Advantageously, as the carafe is filled with a liquid, for instance a beverage like drinking water, its opening is closed by a lid which is fixed, preferably (thermos)sealed and/or stuck, on the lip.
In a variant, the closure is a pull-off metal or plastic closure.

According to another dimensional characteristic, the largest dimension of the cross section of the body, downwardly and successively, increases, possibly is constant, and decreases.

It is important to facilitate the prehension of the preform and the carafe during their industrial manufacture, by means of an annular groove, which upper face is preferably the lower face of the lip edging the opening of the carafe.

The design of the carafe can be improved through the bottom of the carafe which comprises a recess extending inside the body, said recess being preferably a commercial distinctive sign of the carafe.

According to a noteworthy property of the carafe, at least one end (preferably both ends) of the oval neck finish is part of a pouring spout, this latter preferably comprising another part which extends downwardly and which is integral to the neck.

The carafe according to the invention has a least one of the following advantageous features, in order to make it possible its industrial IBM manufacture, as well as its filling, sealing, labeling and boxing :
- ratio R1 = W1/L1 wherein W1 is the internal width of the neck finish and L1 is its internal length, is such as (in an increased order of preference) :
   0.01 ≤ R1≤ 20 ; 0.1 ≤ R1≤ 5 ; 0.5 ≤ R1 ≤ 0.9 ;
- thickness T1 of the neck lip, is such as (in mm and in an increased order of preference) :
   0.05 ≤ T1 ≤ 10; 0.1 ≤ T1≤ 5; 1 ≤ T1 ≤ 3;
- thickness T2 of the neck wall, is such as (in mm and in an increased order of preference) :
   0.5 ≤ T2 ≤ 10; 1 ≤ T1≤ 5; 1 ≤ T1 ≤ 2;
- carafe height HI measured along the axis A, is such as (in mm and in an increased order of preference :
   100 ≤ HI ≤ 600 ; 150 ≤ H1 ≤ 400 ; 200 ≤ H1 ≤ 300 ;
- neck and neck finish height H2 measured along the axis A, is such as (in mm and in an increased order of preference :
   5 ≤ H2 ≤ 100 ; 10 ≤ H2 ≤ 60 ; 15 ≤ H2 ≤ 40

The (thermo)plastic raw material is preferably chosen among the polymers which exhibit strain hardening when they are elongated, and, more preferably among the polyesters, particularly the aromatic polyesters, more particularly chosen in the group comprising, and even more particularly consisting in : PolyEthylene Terephtalate (PET) and/or PolyEthylene-Naphtalate (PEN) or PolyEthylene Furanoate (PEF).

### The preform

In another of its aspect, the invention also proposes a preform for the manufacture of the plastic carafe.

Said preform preferably comprises a neck finish, a neck, a body and a bottom, wherein:
- the neck finish and the neck have an oval, preferably elliptic, cross-section;
- at least the largest dimension of the cross section of the neck decreases from the top to the base of the neck;
- the body has a circular cross-section.

In a preferred embodiment, the smallest dimension of the cross section of the preform neck is constant from the top to the base of the neck.

In a variant of this preferred embodiment the smallest dimension of the cross section of the preform neck decreases from the top to the base of the neck.

In other optional and interesting embodiments, the invention may comprise one or several of the following features:
i. it comprises an opening defined by a lip comprising one face which is included in a plane perpendicular to the preform axis;
ii. it comprises an annular groove, which upper face is preferably the lower face of the lip edging the opening of the preform;
iii. at least one end of the oval neck finish is part of a pouring spout, this latter preferably comprising another part which extends downwardly and which is integral to the neck.

The preform according to the invention has a least one of the following advantageous features, in order to make it possible its industrial ISBM manufacture:
- ratio R1^{p} = W1^{p}/L1^{p}, wherein W1^{p} is the internal width of the neck finish and L1^{p} is its internal length is such as (in an increased order of preference):
   0.1 ≤ R1^{p} ≤ 20 ; 1 ≤ R1^{p} ≤ 10 ; 4 ≤ R1^{p} ≤ 8 ;
- thickness T1^{p} of the neck lip, is such as (in mm and in an increased order of preference) :
   0.05 ≤ T1^{p} ≤ 10; 0.1 ≤ T1^{p} ≤ 5; 1 ≤ T1^{p} ≤ 3;
- thickness T2^{p} of the neck wall, is such as (in mm and in an increased order of preference) :
   0.5 ≤ T2^{p} ≤ 10; 1 ≤ T2^{p} ≤ 5; 1 ≤ T2^{p} ≤ 2;
- preform height H1^{p} measured along the axis A, is such as (in mm and in an increased order of preference :
   10 ≤ H1^{p} ≤ 400 ; 50 ≤ H1^{p} ≤ 200 ; 80 ≤ H1^{p} ≤ 150 ;
- neck finish height H2^{p} measured along the axis A, is such as (in mm and in an increased order of preference :
   1 ≤ H2^{p} ≤ 50 ; 10 ≤ H2^{p} ≤ 40 ; 20 ≤ H2^{p} ≤ 30.

Advantageously, the total height H2^{p} of the neck and of neck finish (also named transition zone), represents between 5 and 50 % of the total height H1^{p} of the preform.

### The method for manufacturing the carafe

According to a third aspect, the invention proposes a method of making a carafe as previously defined, comprising the steps of:
- providing a preform as above defined, said preform being made by injection molding in a first mold;
- seizing the preform, preferably at least by its neck finish and/or neck;
- carrying the preform;
- possibly cooling said preform;
- possibly heating said preform;
- placing said preform in a second mold,
- sealing the preform and introducing, into the preform, a blowing device including a blowpipe, adapted to supply the cavity with a fluid at a blowing pressure to form the carafe;
- blowing the preform, the mold being possibly heated at a temperature greater than or equal to 50°C, preferably comprised between 50°C and 100°C, more preferably between 65°C and 85°C.

It has been surprisingly found that the method according to the invention makes it possible to seal and to blow/mold the preform in carafe, notwithstanding the oval cross section of the neck finish and of the neck and notwithstanding the bell-shaped neck of said preform.

This result is all the more amazing since the blown carafe is not undermined anywhere, and notably not at the narrowing junction between the neck and the body.

In particular, the blowing step could advantageously comprise blowing the preform through the opened top end at a blowing pressure less than or equal to 35 bars, preferably 30 bars, more preferably 25 bars, more preferably 20 bars, more preferably 15 bars, more preferably 10 bars.

It is mentioned that the method according to the invention can also comprise:
- a step of filling the carafe with a liquid, for example a beverage or a non-food liquid such as a home care product or a personal care product, preferably a beverage;
- a step of closing the carafe, filled or empty, with a closure, for example a thermosealed, stuck or threaded cap;
- a step of labelling consisting in affixing on the carafe the brand and the specifications of the packaged liquid, for instance by fixing a label or by direct printing;
- and optionally a step of boxing and storing the boxes of carafes.

### The mold

In a third aspect, the invention relates to a mold for the manufacture by blow molding of the carafe according to the invention. Said mold is characterized in that the cavity of said mold is the imprint of a carafe made by an Injection (Stretch) Blow Molding (I(S)BM) method, and comprising a neck finish, a body and a bottom, the neck finish and the body of said carafe having an oval, preferably elliptic, cross-section according to the invention.

Said preform, manufacturing method and mold are very well adapted to the industrial constraints of high productivity, high quality, low cost.

### Detailed description of the invention

Further objects and advantages of the invention will emerge from the following disclosure of a particular embodiment of the invention given as a non limitative example, the disclosure being made in reference to the enclosed drawings in which:
- Figures 1 & 4 are side views of the ISBM made carafe according to the invention, seen in the direction S shown on Figure 3.
- Figure 2 is a front view of the ISBM made carafe according to the invention, seen in the direction F shown on Figure 3.
- Figure 3 is a top view of the ISBM made carafe according to the invention.

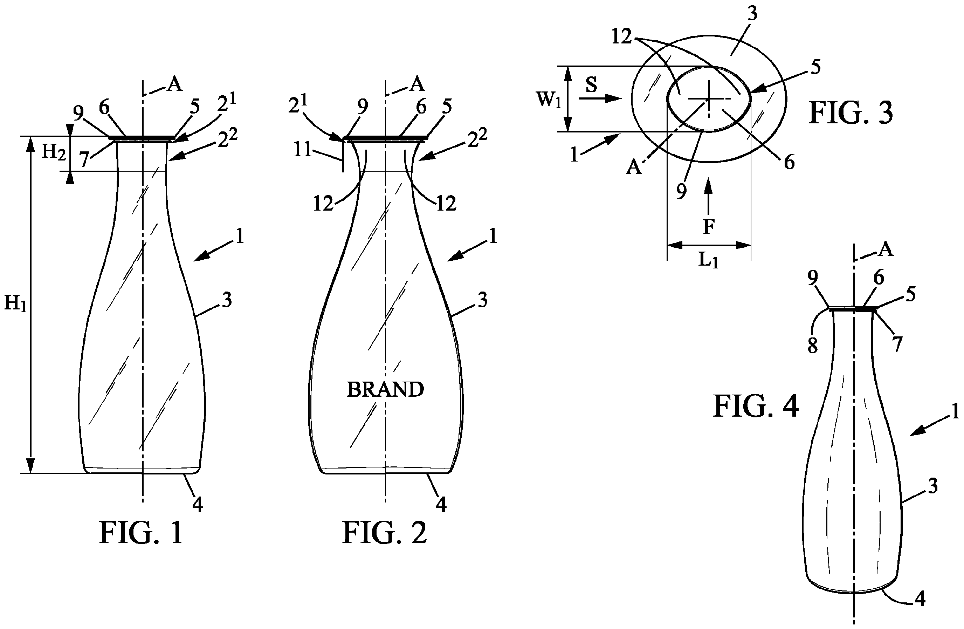

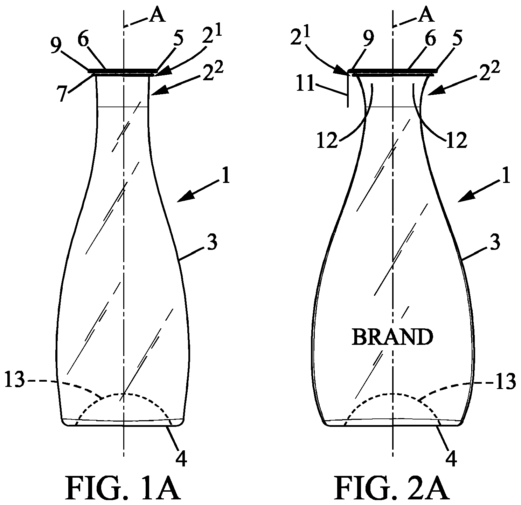

- Figures 1A & 2A are respectively side and front views of an ISBM made carafe according to a variant of the embodiment according to Figures 1-4, seen in the directions S and F, respectively, shown on Figure 3.

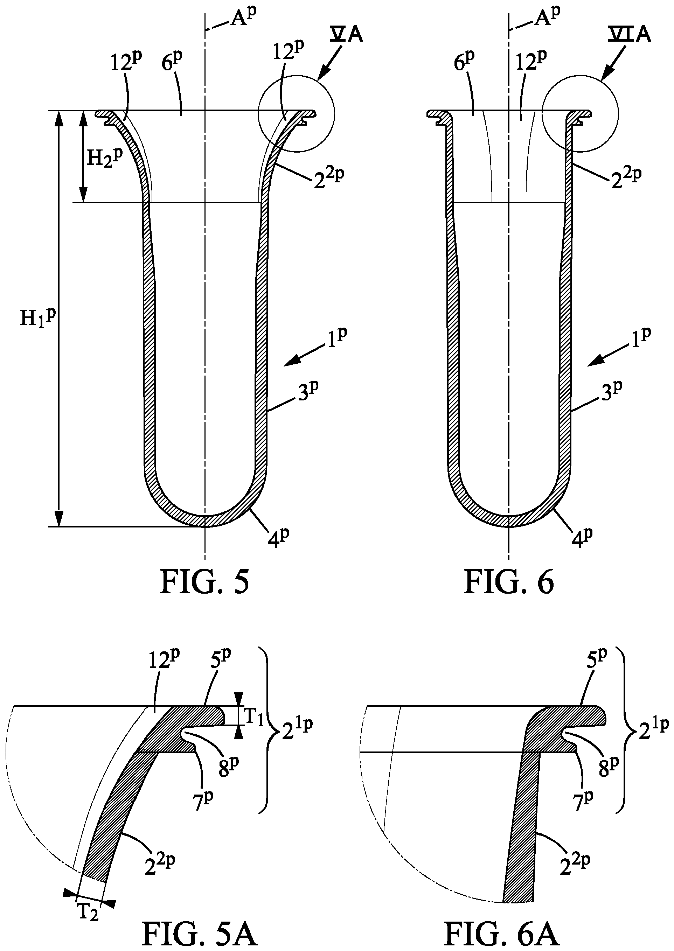

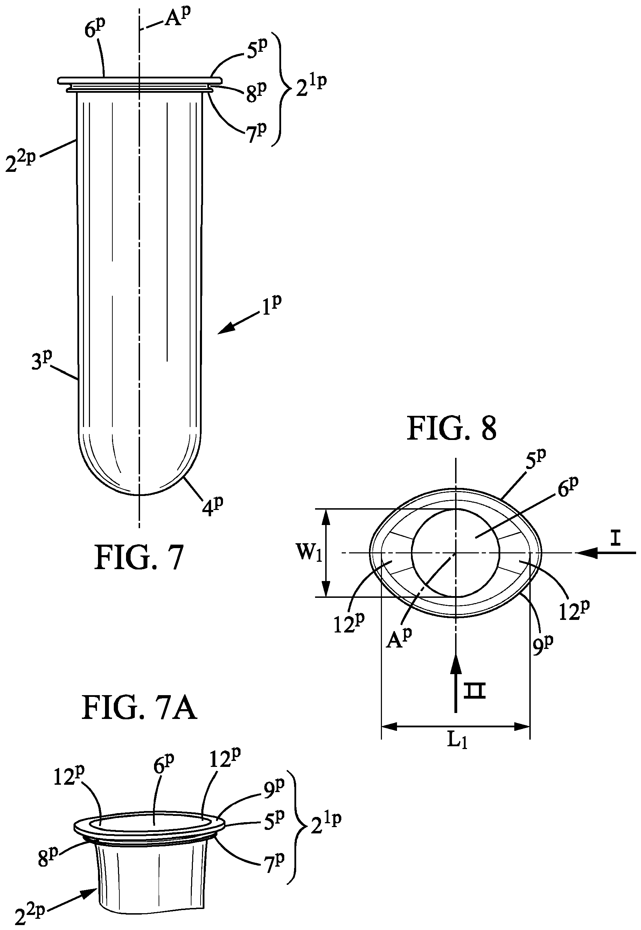

- Figure 5 is a view of a longitudinal section of the preform of Figure 7, along the cut plane I shown on Figure 8.
- Figure 6 is a view of a longitudinal section of the preform of Figure 7, along the cut plane II shown on Figure 8.
- Figure 7 is a front view of the preform of the carafe according to the invention.
- Figure 8 is a top view of the preform of Figure 7.
- Figure 5A is a magnifying view of the detail V-A of Figure 5.
- Figure 6A is a magnifying view of the detail VI-A of Figure 6.
- Figure 7A is a partial view of the upper part (neck finish) of the preform of Figure 7.

On the Figures, the same reference numbers refer to the same or similar elements.

### The carafe

Figures 1-4 represents a carafe 1 suitable for containing for example a liquid such as water, and manufactured from PET by a ISBM method. The carafe 1 has an axis A, and comprises, from its top:
- neck finish 2¹;
- a bell-shape neck 2²;
- a body 3,
- a bottom 4.

The neck finish 2¹ and the neck 2² of the carafe 1 (Figures 1-4) are the remaining parts of the preform 1^{p} (Figures 5-8), which is blown and moulded to make the carafe 1. So, the neck finish 2¹ and the neck 2² of the carafe 1 are identical to the neck finish 2^{1p} and the neck 2^{2p} of the preform 1^{p}. These upper parts of the preform 1^{p} are indeed not modified by the blow molding, contrary to the body 3^{p} and the bottom 4^{p} of the preform 1^{p}, which are magnified and shaped into the body 3 and the bottom 4 of the carafe 1.

The upper edge of the neck finish 2¹ is composed of a lip 5 which delimits the opening 6 of the carafe 1 and which defines with a ring 7, an annular groove 8. This latter is shown magnified on the figures 5A & 6A representing a detail (neck finish 2¹ and upper part of the neck 2²) of the preform 1^{p} used in the ISBM manufacture of the carafe 1. In all the figures 5,6,5A,6A,7,7A;8 of the preform 1^{p} , the references correspond to the references used for designated the carafe 1 on figures 1,2,3,4, and marked with an exponent ^{p} .
This annular groove 8 is advantageously a housing intended to cooperate with a prehension tool useful in the industrial automated process of manufacture then of bottling of the carafe 1.
The lip 5, the ring 7, and the annular groove 8 form together the neck finish 2¹ of the carafe 1.
The upper face 9 of the lip 5 is included in a horizontal plane perpendicular to the vertical axis A of the carafe 1. Reference is made to "horizontal" and "vertical", when the carafe 1 is laid down flat. The lip 5 is then a flat projecting edge on which a lid 10 can be sealed/stuck, in order to provide a waterproof closure for the filled carafe. This closure lid 10, which is shown on the carafe 1 of figure 2, comprises a tab 11 to remove the sealed throwaway lid 10. The sealing of the lid 10 is for example a thermosealing.
The lid 10 can be for example the cover member described in WO2012168471A1, WO2013092529A1 or WO2014170215A1.

According to one of the essential features of the invention, the cross section of the neck finish 2¹ is oval, and more particularly elliptic. Thus, the opening 6 is oval and more particularly elliptic.

The neck 2² which extends downwardly from just below the ring 7 to the upper end of the body 3, has also an oval, and more particularly elliptic, cross section.
The neck 2² is bell-shaped and so, its largest dimension decreases from its top to its base.
This decrease appears on figure 2 of the carafe 1 and on figures 5,5A of the preform 1^{p}.

Thanks to this oval (elliptic) section, at least one end, preferably each end (with reference to the largest dimension of the oval/ellipse) of the neck finish 2¹ and the neck 2², forms a pouring spout 12, which is designated 12^{p} and which appears especially on figures 5,6,5A,6A,7,7A;8 of the preform 1^{p}. These pouring spouts 12,12^{p} preferably extend from the the neck finish 2¹, 2^{1p} to the base of the neck 2², 2^{2p}. These pouring spouts 12,12^{p} can be likened to canals, each defined by a difference of thickness of the neck 2² , 2^{2p} with respect to the rest of the neck 2² , 2^{2p}. As shown on figures 5,5A, the thickness of the rest of the neck 2² , 2^{2p} is constant from the underside of the ring 7^{p},7 to the base of the neck 2², 2^{2p}.
Therefore, the consumer can easily spill the liquid contained in the carafe after tearing of the throwaway lid 10.

The neck 2² shrinks from its top to its base.
The body 3 widens downwardly from its top to at least 50% (80%) of its height, then shrinks up to the bottom 4.

According to one of the essential features of the invention, the cross section of the body 3 is oval, and more particularly elliptic.
The front view of figure 2 shows the largest face of the body 3, which width corresponds to the largest dimension (length) of the body 3 oval/elliptic section. The figures 1,4 show the smallest face of the body 3, which width corresponds to the smallest dimension (width) of the body 3 oval/elliptic section.
The figure 3 shows the oval/elliptic shape of the neck finish 2 and of the body 3.
In this preferred but not exclusive embodiment of the carafe 1, the general shape of the body 3 is drop-like. The oval/elliptic body 3 cross section increases from the top of the body 3 to 80% of its height and then decreases to the bottom 4.
In this embodiment, the largest face of the carafe 1 is marked with the brand of the packaged liquid.

The bottom 4 of the carafe 1 consists in the sole on which the carafe 1 lays in the vertical position.

According to a particular embodiment shown on figures 1A & 2A, the bottom 4 presents a recess 13 extending inside the body 3. Said recess 13 can be a hold to handle the carafe 1 during its industrial manufacture or bottling, or at the time of its use. In the embodiment shown on figures 1A & 2A, the recess 13 is a dome. It can also be a commercial distinctive sign of the carafe, for instance a mountainous embossing.

The so-described carafe is a new ISBM made PET container for liquids which is just as well aesthetic and practical to use and also compatible with an industrial manufacture and bottling.

As a non-limitative example:
- internal length L1 of the opening of the oval neck finish (see figure 3): between 20 and 80 mm, e.g circa 50 mm;
- internal width W1 of the opening of the oval neck finish (see figure 3): between 10 and 50 mm, e.g circa 30 mm;
- ratio R1 = W1/L1 = between 1.125 and 2.5, e.g circa 0.6 ;
- thickness T1 of the neck wall = between 0.5 and 4 mm, e.g circa 1.5 mm;
- carafe 1 height HI measured along the axis A between 200 and 300 mm, e.g circa 250 mm;
- neck finish 2¹ and neck 2² height H2 measured along the axis A between 15 and 40 mm, e.g circa 25 mm.

According to possible variants, the body 3 and/or the neck 2² could be provided with one or several imprints of any kind, especially selected from the group consisting of splines, grooves, ribs, embossings, decorative patterns, gripping elements, trademark indications, production indications, Braille characters and a combination thereof.

According to other variants, the plastic raw material for manufacturing the carafes 1 can be at least partly biosourced : *e.g.* a thermoplastic polymer of at least one FuranDiCarboxylic Acid (FDCA) monomer and at least one diol monomer. In particular, the thermoplastic polymer is a PolyEthyleneFuranoate (PEF) based on biobased 2,5-FDCA and biobased MonoEthyleneGlycol (MEG).

The invention also encompasses the carafe 1 industrially filled with a liquid, such as water or another beverage, before closing the opening 6 with a lid 10.

### The preform

The preform 1^{p} of the carafe 1 is represented on figures 5,6,5A,6A,7,7A;8.
The preparation of the polymer and the manufacture of the bottle are detailed below in the following example.

Said preform 1^{p} which is obtained through the 1^{st} molding of the ISBM manufacture method, from a thermoplastic polymer such as PET, includes:
- a neck finish 2^{1p};
- a neck 2^{2p};
- a body 3^{p},
- a bottom 4^{p}.
The neck finish 2^{1p} and the neck 2^{2p} are the same as the neck finish 2¹ and the neck 2^{p} of the carafe 1, as above described.
The axis A of the carafe 1 corresponds to the axis A^{p} of the preform 2^{p}.

The cross section of the neck finish 2^{1p} and the neck 2^{2p} has an oval/elliptic shape.
The length of the cross section of the neck 2^{2p} decreases from its top to its base, as shown on the figures 2,5,5A.
The pouring spout 12^{p} are formed by two canals at each end of the neck 2^{2p}, as shown on figure 5,5A,6 and 8. These canals are defined by a thinning of the wall of the neck finish 2^{p}.
The wall thickness T2 of the neck 2^{2p} is substantially constant, but can also increase from just beneath the ring 7^{p} defining the prehension groove 8^{p} with the lip 5^{p}, to the base of the neck 2^{2p}, along the height of said neck 2^{2p} (figure 6A).

The body 3^{p} is a revolution cylindrical part of the preform 1^{p} (circular cross section).
The wall thickness of the body 3^{p} increases on an upper part of said body 3^{p}, to reach a maximum and constant value, along the lower part of the body 3^{p}.
The upper part of the body 3^{p} starts from the base of the neck 2^{2p}.
The lower part of the body 3^{p} is the main part of the body 3^{p} (circa 70% of the body 3^{p} height). The wall of said lower and main part of the body 3^{p}, is also straight and substantially parallel to the axis A^{p}.

The bottom 4^{p} of the preform 1^{p} is the curved part forming the closed end opposed to the opening 6^{p}. The wall thickness of the bottom 4^{p} is substantially constant.

As a non-limitative example:
- internal length L1^{p} of the opening of the oval neck finish : between 20 and 80 mm, e.g circa 50 mm
- internal width W1^{p} of the opening of the oval neck finish : between 10 and 50 mm, e.g circa 30 mm;
- ratio R1^{p} = W1^{p}/L1^{p} = between 1.125 and 2.5, e.g circa 0.6;
- thickness T1^{p} of the neck wall = between 0.5 and 4 mm, e.g circa 1.5 mm;
- preform 1^{p} height H1^{p} measured along the axis A between 30 and 250 mm, e.g circa 110 mm
- neck finish 2^{1p} and neck 2^{2p} height H2^{p} measured along the axis A between 15 and 40 mm, e.g circa 25 mm.

### The process

Reference is made to the following example

### Example

### Materials

The thermoplastic raw material is a PET resin INVISTA T94

### Manufacturing method of the carafe

The carafe according to the invention is preferably manufactured by a blow molding process implementing a mold, such as a Sidel SBO 1 machine, having a cavity comprising the carafe imprinting, and a blowing device adapted to supply the cavity with a fluid at a blowing pressure.

The blow molding process implements a 50 g preform 2^{p} made of PET. The preform height is 114 mm and the body 3^{p} external diameter in the lower and main part of the body 3^{p}, is 3.8 mm.
- internal length L1^{p} of the opening of the oval neck finish : circa 50 mm
- internal width W1^{p} of the opening of the oval neck finish : circa 30 mm;
- ratio R1^{p} = W1^{p}/L1^{p} : circa 0.6 ;
- thickness T1^{p} of the neck wall : circa 1.5 mm;
- preform 1^{p} height H1^{p} measured along the axis A : circa 115 mm
- neck finish 2^{1p} & neck 2^{2p} height H2^{p} measured along the axis A : circa 25 mm.

To manufacture 50 g preforms 2^{p} of the above disclosed type, a 20 kg sample of the above disclosed thermoplastic polymer PET is used in a Nestal Elion 800 injection molding machine, in 1^{st} mold. The matter was heated to 250°C (T1), with a cycle time of 19.92 s (t1). The PET preforms 2^{p} where heated to a surface temperature of 120°C. After the preforms 2^{p} have been placed in a second mold at a cold temperature T2 of 10°C-13°C, the preforms 2^{p} can be blown through injection of the fluid at the blowing pressure (P2) within the preform through the opened top end 6^{p}. The blowing pressure is 35 bars.

Beyond this example:
150 ≤ T1 (°C) ≤ 400 ; preferably 200 ≤ T1 (°C) ≤ 300 ;
10 ≤ t1 (s) ≤ 60 ; preferably 15 ≤ t1 (s) ≤ 40 ;
1 ≤ T2 (°C) ≤ 40 ; preferably 5 ≤ T2 (°C) ≤ 20 ;
20 ≤ P2 (bars) ≤ 50 ; preferably 25 ≤ P2 (bars) ≤ 40 ;

The so produced carafes are identical to the above described carafe 1.
- internal length L1 of the opening of the oval neck finish : circa 50 mm
- internal width W1 of the opening of the oval neck finish : circa 30 mm;
- ratio R1 = W1/L1 : circa 0.6 ;
- thickness T1 of the neck wall : circa 1.5 mm;
- carafe 1 height HI measured along the axis A : circa 240 mm
- neck finish 2¹ & neck 2² height H2 measured along the axis A : circa 25 mm.

## Claims

1. A preform (1^{p}) in a thermoplastic polymer, preferably PolyEthyleneTerephtalate, comprising a neck finish (2^{1p}), a neck (2^{2p}), a body (3^{p}) and a bottom (4^{p}), wherein:
the body (3^{p}) has a circular cross-section,
and the preform being **characterized in that**
• the neck finish (2^{1p}) and the neck (2^{2p}) have an oval, preferably elliptic, cross-section;
• at least the largest dimension of the cross section of the neck (2^{2p}) decreases from the top to the base of the neck (2^{2p}).

2. A preform (1^{p}) according to claim 1 wherein the smallest dimension of the cross section of the neck (2^{2p}) is constant from the top to the base of the neck (2^{2p}).

3. A preform (1^{p}) according to claim 1 wherein the smallest dimension of the cross section of the neck (2^{2p}) decreases from the top to the base of the neck (2^{2p}).

4. A preform (1^{p}) according to at least one of the claims 1 to 3, having at least one of the following features :
i. it comprises an opening defined by a lip (5^{p}) comprising one face (9^{p}) which is included in a plane perpendicular to the preform (1^{p}) axis (A^{p});
ii. it comprises an annular groove (8^{p}), which upper face is preferably the lower face of the lip (5^{p}) edging the opening (6^{p}) of the preform (1^{p});
iii. at least one end of the oval neck finish (2^{1p})is part of a pouring spout (12^{p}), this latter preferably comprising another part which extends downwardly and which is integral to the neck (2^{2p}).

5. An Injection Blow Molding method of making a carafe (1), wherein a preform (1^{p}) according to at least one of the claim 1 to 4 , is injected molded in a first mold and is then blown-molded in a second mold,
said carafe (1) comprising from its top, a neck finish (2¹), a neck (2²), a body (3) and a bottom (4), wherein:
• the neck finish (2¹), the neck (2²), and possibly the body (3), of said carafe (1) having an oval, preferably elliptic, cross-section;
• at least the largest dimension of the cross section of the neck (2²) decreases from the top to the base of the neck (2²).

6. A method of making a carafe (1) according to claim 5, comprising the steps of:
- providing a preform (1^{p}) as above defined, said preform (1^{p}) being made by injection molding in a first mold;
- seizing the preform (1^{p}), preferably at least by its neck finish (2^{1p}) and/or neck (2^{2p});
- carrying the preform (1^{p});
- possibly cooling said preform (1^{p});
- possibly heating said preform (1^{p});
- placing said preform (1^{p}) in a second mold;
- sealing the preform (1^{p}) and introducing, into the preform (1^{p}), a blowing device including a blowpipe, adapted to supply the cavity with a fluid at a blowing pressure to form the carafe (1);
- blowing the preform (1^{p}), the mold being possibly heated at a temperature greater than or equal to 50°C, preferably comprised between 50°C and 100°C, more preferably between 65°C and 85°C.

## Patentansprüche

1. Vorformling (1^{p}) aus einem thermoplastischen Polymer, vorzugsweise PolyEthylenTerephthalat, mit einer Mündung (21^{p}), einem Hals (2^{2p}), einem Körper (3^{p}) und einem Boden (4^{p}), wobei
der Körper (3^{p}) einen kreisförmigen Querschnitt aufweist,
und der Vorformling **dadurch gekennzeichnet ist, dass**:
- die Mündung (2^{1p}) und der Hals (2^{2p}) einen ovalen, vorzugsweise elliptischen, Querschnitt aufweisen;
- mindestens die größte Abmessung des Querschnitts des Halses (2^{2p}) von der Oberseite zur Unterseite des Halses (2^{2p}) abnimmt.

2. Vorformling (1^{p}) nach Anspruch 1, wobei die kleinste Abmessung des Querschnitts des Halses (2^{2p}) von der Oberseite bis zur Basis des Halses (2^{2p}) konstant ist.

3. Vorformling (1^{p}) nach Anspruch 1, bei dem die kleinste Abmessung des Querschnitts des Halses (2^{2p}) von der Oberseite zur Basis des Halses (2^{2p}) abnimmt.

4. Vorformling (1^{p}) nach mindestens einem der Ansprüche 1 bis 3, der mindestens eines der folgenden Merkmale aufweist:
i. er weist eine Öffnung auf, die durch eine Lippe (5^{p}) definiert ist, die eine Fläche (9^{p}) aufweist, die in einer Ebene senkrecht zur Achse (A^{p}) des Vorformlings (1^{p}) eingeschlossen ist;
ii. er umfasst eine ringförmige Nut (8^{p}), deren obere Fläche vorzugsweise die untere Fläche der Lippe (5^{p}) ist, die die Öffnung (6^{p}) des Vorformlings (1^{p}) begrenzt
iii. mindestens ein Ende des ovalen Halsabschlusses (2^{1p}) Teil einer Ausgießtülle (1^{2p}) ist, wobei letztere vorzugsweise einen weiteren Teil umfasst, der sich nach unten erstreckt und mit dem Hals (2^{2p}) einstückig ist.

5. Spritzblasverfahren zur Herstellung einer Karaffe (1), wobei ein Vorformling (1^{p}) nach mindestens einem der Ansprüche 1 bis 4 in einer ersten Form spritzgegossen und anschließend in einer zweiten Form blasgeformt wird,
wobei die Karaffe (1) von ihrer Oberseite her eine Mündung (21), einen Hals (22), einen Körper (3) und einen Boden (4) aufweist, wobei:
- die Mündung (21), der Hals (22) und möglicherweise der Körper (3) der Karaffe (1) einen ovalen, vorzugsweise elliptischen, Querschnitt aufweisen;
- zumindest die größte Abmessung des Querschnitts des Halses (22) von der Oberseite zur Unterseite des Halses (22) hin abnimmt.

6. Verfahren zur Herstellung einer Karaffe (1) nach Anspruch 5, umfassend die Schritte:
- Bereitstellen eines Vorformlings (1^{p}) wie oben definiert, wobei der Vorformling (1^{p}) durch Spritzgießen in einer ersten Form hergestellt wird;
- Erfassen des Vorformlings (1^{p}), vorzugsweise zumindest an seinem Mündungsbereich (2^{1p}) und/oder Hals (2^{2p});
- Tragen des Vorformlings (1^{p});
- gegebenenfalls Kühlen des Vorformlings (1^{p});
- gegebenenfalls Erwärmen des Vorformlings (1^{p});
- Anordnen des Vorformlings (1^{p}) in einer zweiten Form;
- Versiegeln des Vorformlings (1^{p}) und Einführen einer Blasvorrichtung mit einem Blasrohr in den Vorformling (1^{p}), die geeignet ist, den Hohlraum mit einem Fluid mit einem Blasdruck zu versorgen, um die Karaffe (1) zu bilden;
- Blasen des Vorformlings (1^{p}), wobei die Form möglicherweise auf eine Temperatur von mehr als oder gleich 50°C, vorzugsweise zwischen 50°C und 100°C, besonders bevorzugt zwischen 65°C und 85°C, erhitzt wird.

## Revendications

1. Préforme (1^{p}) dans un polymère thermoplastique, de préférence un polyéthylène téréphtalate, comprenant une bague (2^{1p}), un col (2^{2p}), un corps (3^{p}) et un fond (4^{p}), dans laquelle :
le corps (3^{p}) a une section transversale circulaire,
et la préforme étant **caractérisée en ce que**
• la bague (2^{1p}) et le col (2^{2p}) ont une section transversale ovale, de préférence elliptique ;
• au moins la plus grande dimension de la section transversale du col (2^{2p}) diminue depuis le sommet jusqu'à la base du col (2^{2p}).

2. Préforme (1^{p}) selon la revendication 1 dans laquelle la plus petite dimension de la section transversale du col (2^{2p}) est constante depuis le sommet jusqu'à la base du col (2^{2p}).

3. Préforme (1^{p}) selon la revendication 1 dans laquelle la plus petite dimension de la section transversale du col (2^{2p}) diminue depuis le sommet jusqu'à la base du col (2^{2p}).

4. Préforme (1^{p}) selon au moins une des revendications 1 à 3, ayant au moins une des caractéristiques suivantes :
i. elle comprend une ouverture définie par une lèvre (5^{p}) comprenant une face (9^{p}) qui est comprise dans un plan perpendiculaire à l'axe (A^{p}) de préforme (1^{p}) ;
ii. elle comprend une rainure annulaire (8^{p}), dont la face supérieure est de préférence la face inférieure de la lèvre (5^{p}) bordant l'ouverture (6^{p}) de la préforme (1^{p}) ;
iii. au moins une extrémité de la bague (2^{1p}) ovale fait partie d'un bec verseur (12^{p}), ce dernier comprenant de préférence une autre partie qui s'étend vers le bas et qui est intégrée au col (2^{2p}).

5. Procédé de moulage par injection et soufflage consistant à fabriquer une carafe (1), dans lequel une préforme (1^{p}) selon au moins une des revendications 1 à 4, est moulée par injection dans un premier moule et est ensuite moulée par soufflage dans un second moule,
ladite carafe (1) comprenant depuis son sommet, une bague (2¹), un col (2²), un corps (3) et un fond (4), dans lequel :
• la bague (2¹), le col (2²), et éventuellement le corps (3), de ladite carafe (1) ayant une section transversale ovale, de préférence elliptique ;
• au moins la plus grande dimension de la section transversale du col (2²) diminue depuis le sommet jusqu'à la base du col (2²).

6. Procédé de fabrication d'une carafe (1) selon la revendication 5, comprenant les étapes consistant à :
- fournir une préforme (1^{p}) telle que définie ci-dessus, ladite préforme (1^{p}) étant fabriquée par moulage par injection dans un premier moule ;
- saisir la préforme (1^{p}), de préférence au moins par sa bague (2^{1p}) et/ou son col (2^{2p}) ;
- transporter la préforme (1^{p}) ;
- éventuellement refroidir ladite préforme (1^{p}) ;
- éventuellement chauffer ladite préforme (1^{p}) ;
- placer ladite préforme (1^{p}) dans un second moule ;
- sceller la préforme (1^{p}) et introduire, dans la préforme (1^{p}), un dispositif de soufflage comprenant un chalumeau, adapté pour apporter dans la cavité un fluide à une pression de soufflage pour former la carafe (1) ;
- souffler la préforme (1^{p}), le moule étant éventuellement chauffé à une température supérieure ou égale à 50 °C, de préférence comprise entre 50 °C et 100 °C, de manière davantage préférée entre 65 °C et 85 °C.
